# EUROPEAN PATENT APPLICATION

(11) **EP 0 570 323 A1**
(43) Date of publication of application: **18.11.1993**
(21) Application number: 93500064.6
(22) Date of filing: 14.05.1993
(51) Int. Cl.: A22C 7/00

(54) **An automatic mould unloader for meat products, such as hams**

(30) Priority: 14.05.1992 ES 9201101
(71) Applicant: METALQUIMIA S.A., E-17007 Girona (ES)
(72) Inventor: Lagares Corominas, Narciso, E-17007 Girona (ES)
(74) Representative: Manresa Val, Manuel

(57) **Abstract**

It comprises, four supports designed to lodge and fasten different moulds (36), assembled in a supporting structure (17) applied to the displacement of those moulds in a closed circuit, each support including a frame for mounting, two exchangeable plates (40, 41) each of them including an opening (45) allowing the body of a mould to be inserted, with an external rim (57) thereof, which surrounds the mouthpiece, abutting on the periphery of said opening, said plates (40, 41) including means to temporarily withhold the body of the mould (36) to the mentioned plate and, simultaneously, to release the locking arms (56) which fastens the lid (52) to the mould (36), the said frames passing along their displacement in closed circuit, in sequence, at least by : a first station for loading to the plates attached to the frames a mould charged with the product just backed, a second station having a lid removing and evacuating device (25, 26, 5) a third station including means (11, 38, 6) for unloading the product from the mould and evacuating it outside, and a four station wherein the evacuation of the empty mould occurs

## Description

This invention relates to an automatic mould unloader for meat products, such as hams and the like which after sustained baking in a mould, compressed in the said baking mould by a lid inserted in the mould and provided with, at least, a crosspiece mounted floating on two or more columns integral with the lid, with resilient means in between, and arms having a toothed profile for hooking the said lid to the mould, hinged on one end of that crosspiece, and with one of its teeth hooked under an external rim which surrounds the mouthpiece of the mould, the said unloader performing in a sequence the operations of removing the lid from the mould, unloading the product from that mould and evacuating the product and empty mould.

The patent EP 0138.653 discloses a machine of above type, characterized in that it automatically performs all necessary operations, from the closed mould to the evacuation of the product and the empty mould. However, it has to be pointed out that the means used in this machine to release the arms locking the lid to the mould, as well as those to fasten the mould and to lead it during its conveying along the machine, include a U-shaped gutter and a lengthwise development with a detachable arched length, achieve that this machine is little versatile to handle different classes of mould.

The patent EP 0317.519 discloses another machine for the aim explained, which provides a linear circuit with means applied for removing the mould lid, means for reversing the mould position, unloading the product and evacuating it and the empty mould, which, though it shows an advance with respect to the mentioned state-of-the-art, means using likewise very specific means for a certain type of moulds, as much for what concerns removing the lid as for evacuating the mould, therefore the machine is, once again, little versatile to handle different classes of moulds, requesting, for its adaptation, quite complex and expensive operations.

Patents FR 2 459 000 and FR 2 483 183 disclose a machine including a support for lodging and fastening, at least, one mould, rotatable around an horizontal shaft between a position wherein the said mould is upwardly oriented and is devoid of lid due to a removing device, and a second position, wherein the mould is arranged reversed and is unloaded, and the said support includes fake parts for adapting to any of the several moulds to handle. This machine has the limitation of its reduced working capacity as it has a discontinuous and slow working cycle and is likewise little flexible to be adapted to different moulds, the lid removal systems being complex and likewise little adaptable to different moulds, namely hardly usable to handle round-barrel-shaped moulds, closed by four locking arms. This machine has the additional drawback that each lid goes back to be placed on related empty barrel before this later is evacuated, which imposes a further additional operation for removing the mould lid.

The invention has the main aim to construct a machine which allows the automatic performance of meat products mould unloading operations, in a continuous cycle, preventing above drawbacks, with a high productivity, and embodying means which make possible to handle, at same time and without stopping the operative cycle, moulds of several types, being because of its conception highly versatile, i.e. adaptable to different types of moulds in a very simple way.

For such aim, the invention is characterized in that it constitutes a unit embodying, at least, four identical supports designed to lodge and fasten the moulds, assembled in an annular supporting structure applied to the displacement of those moulds in a closed circuit, each support including a frame foreseen for mounting, at least, two exchangeable plates each of them including an opening allowing the body of a certain mould to be inserted, with an external rim thereof, which surrounds the mouthpiece, abutting on the periphery of the said opening, and said plates including means to temporarily withhold the body of the said mould to the mentioned plate and, at same time, to release the locking arms which fastens the lid to the mould. The said frames passe along their displacement in closed circuit, in sequence, at least by four stations: a first station for loading to the plates attached to the frames a mould charged with the product just backed, a second station having a lid removing and evacuating device associated, a third station including means for unloading the product from the mould and evacuating it outside, and a four station wherein the mould evacuation occurs.

The means to withhold the mould and to release the lid locking arms, embodied in each of the plates to lodge and to temporarily withhold a mould, exchangeable, that may be associated to the frame, include catches rotatably mounted in the said plate, driven by dynamic fluid cylinders, installed at the lower part of related plate, located close to the position each of the arms to lock the lid to the mould adopts, when the said mould is lodged in the plate, the pattern of the said catches being such that at one of their positions they are superposed on the rim of the said mould mouthpiece, retaining it linked to that plate, while one of its sides outwardly pushes releasing the locking arms, the height of the catch being in addition higher than the space between two teeth adjacent of the said locking arms and including a chamfered profile in its lower dihedral.

In a possible embodiment of the invention, which is preferred because it allows to simultaneously work with different types of moulds, the machine is characterized in that each frame adopts the shape of a box devoid of two opposite bases, which includes several frames foreseen for mounting in each of them an exchangeable plate designed to lodge and to temporarily withhold a mould body, making the removal of its lid, the said mould emptying and evacuating easier, each of these plates being designed for a certain type of mould and the said frames being arranged in parallelism to these bases of the frame and equidistant, crosswise the hollow of the box and with their side edges introduced within side guides facing each other, in such a way the said frames, and with them mentioned plates, are moving along these guides through pushing members , from a first area where they remain superposed , to a second area where any of the plates, which is chosen, is coincident with a free space of the hollow of the box, allowing to receive the body of a mould, inserted in the related opening.

According to this embodiment of the invention, each of the frames for assembling the plates for lodging and temporarily withhold the moulds has available in one of its sides, close to the corner, lugs , where are connected the ends of stems of dynamic fluid cylinders, parallel to the guides, for moving the said plates to the second area, to load a mould, or to come back to the first area, after ending the operative cycle.

Other characteristics as well as advantages of this invention will appear in detail from a no limitative example of embodiment shown in attached drawings wherein:
Fig. 1 is a top plan view of the machine which includes in this case four working stations,
Fig. 2 is an elevation view of the machine wherein its protecting casing has been removed, to appreciate the whole of the component elements as well as their operative relation to each other.
Fig. 3 is a perspective view of a plate provided with means to withhold the mould and release the lid locking arms, embodied in each of the plates detachably installed in each frame, which constitutes the essential element of this invention.
Fig. 4 is an enlarged elevational view with partial cross section showing the operative of the catches for withholding the mould, temporarily fastened to the plate, and at same time, to release the lid locking arms.
Fig. 5, is a cross sectional view of one of a frame supporting several plates, each of them foreseen for lodging and temporarily withhold a specific mould.
Fig. 6 is a top plan view from above one of the frames, showing two of the mentioned plates for lodging and temporarily withhold a certain mould, one of these mould being shown in perspective prior to its mounting, as well as means for withholding it linked to the plate.
Fig. 7 shows in a side elevational view the device applied for removing the lids of each mould, and their evacuation outside.

This machine is characterized in that, as it has been explained, it embodies, at least, four identical supports 1, 2, 3, 4, designed to lodge and to fasten different types of moulds 36, related to a supporting structure 17 applied to the displacement of the said moulds 36 in a closed circuit. Each of these supports is formed by a frame foreseen for mounting at least two exchangeable plates 40, 41 which include an opening 45 allowing the insertion of the body of a certain mould 36 with a rim, external thereof, which surrounds its mouthpiece, abutting on a peripheral fringe of the said opening 45. The plates 40, 41 likewise includes means for temporarily withhold the body of the said mould 36 to the said plates 40, 41 and, at same time, to release the locking arms 56 which fasten the lid 52 to the mould 36. The frames 1 to 4 passes along their displacement in closed circuit, in a sequence, by, at least, four stations: a first station for loading moulds, a second station which have associated a device 25, 26, 5 which withdraws and evacuates the lid, a third station which includes means 11, 12, 6 for removing the product from the mould and to evacuate it outside, and a fourth station wherein the evacuation of the mould occurs by means 13, 15, 7.

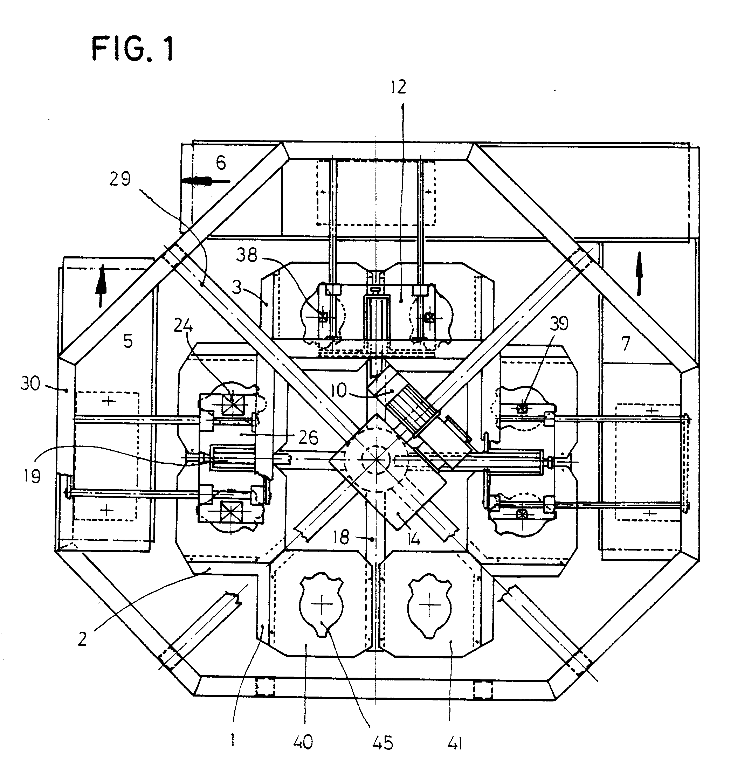

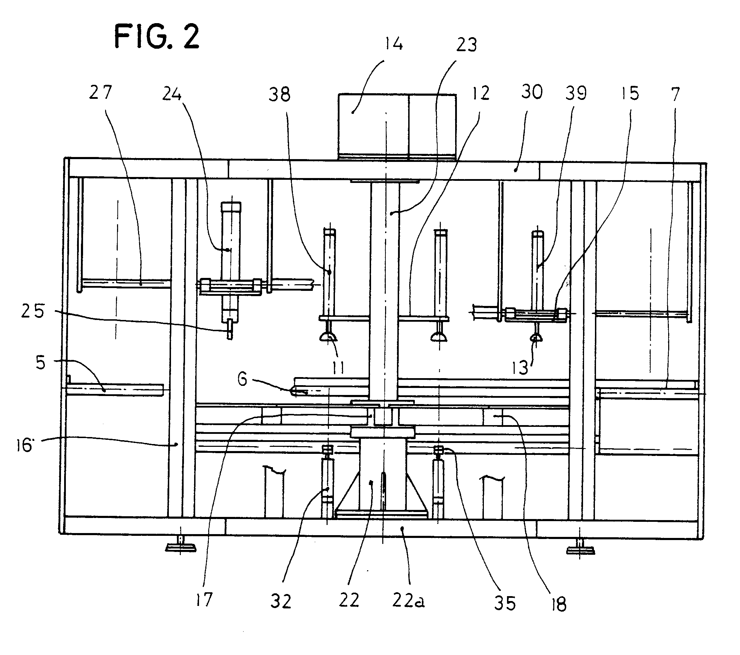

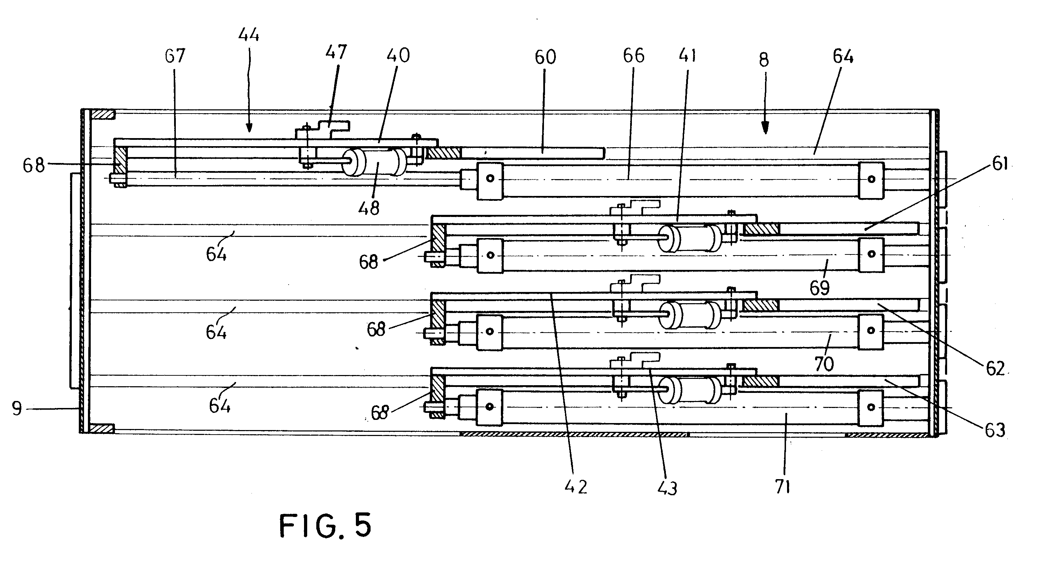

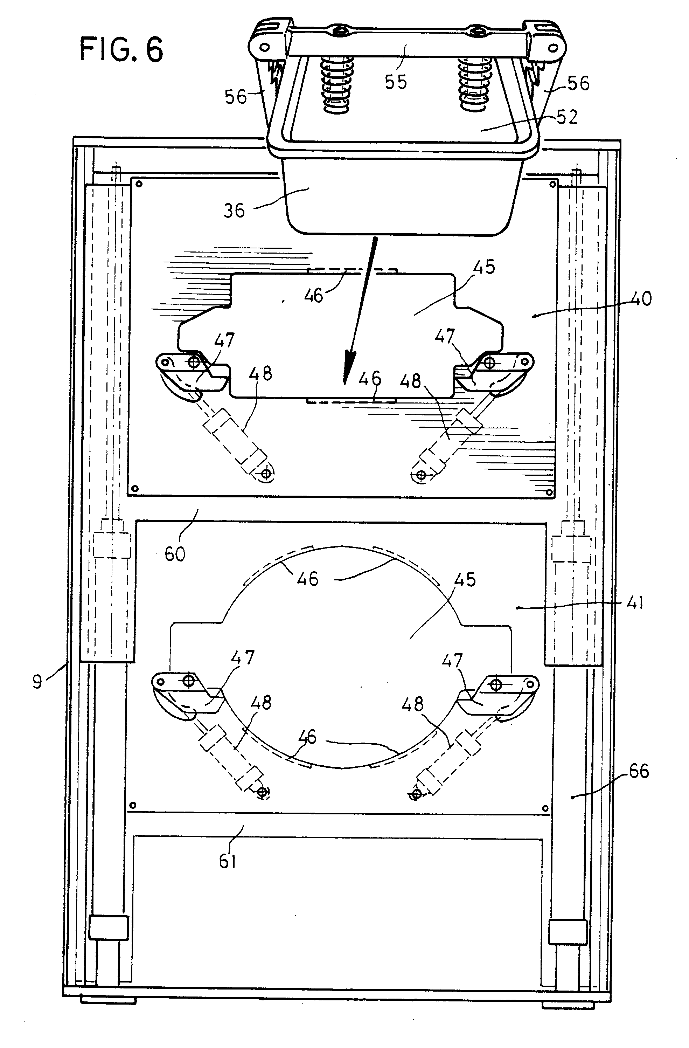

In Figs. 5 and 6 a preferred embodiment of the invention is depictured (the description will be done from this point concerning to this embodiment but it is valid for a structure according to Figs. 1 and 2). In this embodiment each frame 9 comprises a box devoid of two opposite bases, which includes several framings 60, 61, 62, 63 foreseen for mounting, in each of them, one exchangeable plate 40, 41, 42, 43, and for such purpose detachably locked on the said framings, designed to lodge and temporarily withhold the mould 36 body making its lid 52 removal, emptying and final evacuation easier, each of that plates 40, 41, 42, 43 being foreseen for a certain type of mould 36 and embodying for such purpose an opening 45 of suitable shape and size (see Fig 6). The framings 60, 61, 62, 63 are arranged in parallelism to the said bases of the frame 9 and equidistant, crosswise the hollow of the box and with their side edges introduced within side guides 64, facing each other, two by two, and parallel, in such a way that said framings 60, 61, 62, 63 and therefore the corresponding plates 40, 41, 42, 43 are moveable along those guides 64 by pushing members formed by pneumatic cylinders 66, 69, 70, 71, from a first area 8 where they remain superposed, to a second area 44 where any of the said plates 40, 41, 42, 43, which is chosen, remains located in a free space of the hollow of the plate, allowing to receive a mould body 36, inserted in related opening 45, as shown in Fig. 5.

Each of the framings 60, 61, 62, 63 for detachably mounting of the plates 40, 41, 42, 43 has available at one of its sides and close to the two corners, some appendages 68 forming lugs where are connected the stems ends 67 of above pneumatic cylinders 66, 69, 70, 71, parallel to the guides 64 for individual displacement of any of the said plates 40, 41, 42, 43 to the second area for loading a mould or for coming back to the first area 8, after ending the mould handling operative cycle.

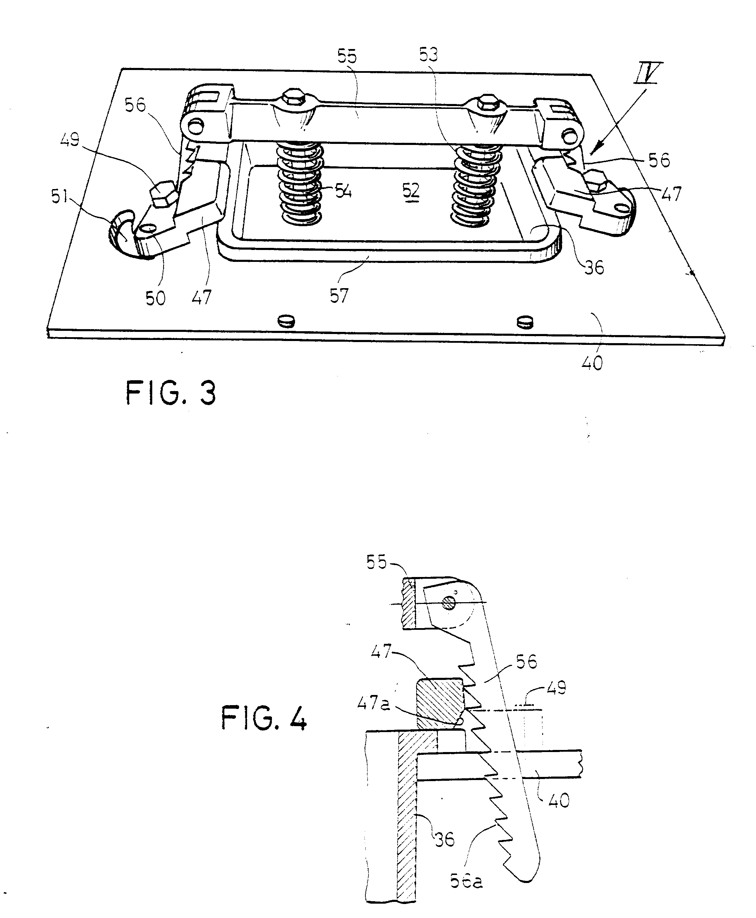

Figs.3 and 4 show, in detail, the means for retaining a mould 36 and to release the arms 56 locking the lid 52, embodied in each of the plates 40, 41, 42, 43 (detachably mounted on the framings 60, 61, 62, 63) for lodging and temporarily retain a certain mould 36. These means include catches 47 mounted in the said plate, rotatable around a shaft 49, driven by pneumatic cylinders 48, hinged in 50 and with swivel holes 52 to make rotation easier, installed at the lower part of related plate and located close to the position, each of the arms 56 locking the lid 52 to the mould will adopt when the said mould 36 is lodged in related opening of the plate 40, 41, 42, 43, the pattern of the said catches being such that at one of its limit positions they are superposed on the rim 57 of the said mould mouthpiece, retaining it, linked to the plate 40, 41, 42, 43, while one of its sides pushes outwardly, releasing the locking arms 56, the catch 47 height being, in addition (see Fig.4) higher than the gap between two adjacent teeth, of the said locking arms 56 and embodying a chamfered profile 47a in its lower dihedral. In mentioned Fig.6, one can see, additionally, in every detail, the crosspiece 55 linked to the mould lid 52 by two columns 53 provided with coaxial springs 54 and, hinged at the said crosspiece ends 55, the locking arms 56.

To facilitate the moulds insertion and evacuation by sucking disks the catches 47 releasing such mould rim 57, preventing unwanted clogging, the openings 45 of the plates 40, 41, 42, 43, detachably associated to the framings 60, 61, 62, 63 of the frame 9, include close to their edges and starting from the lower part of each plate, some walls 46 oriented uprightly to the said plate and following the outline of the opening 45, designed to cooperate for guiding the mould 36 walls.

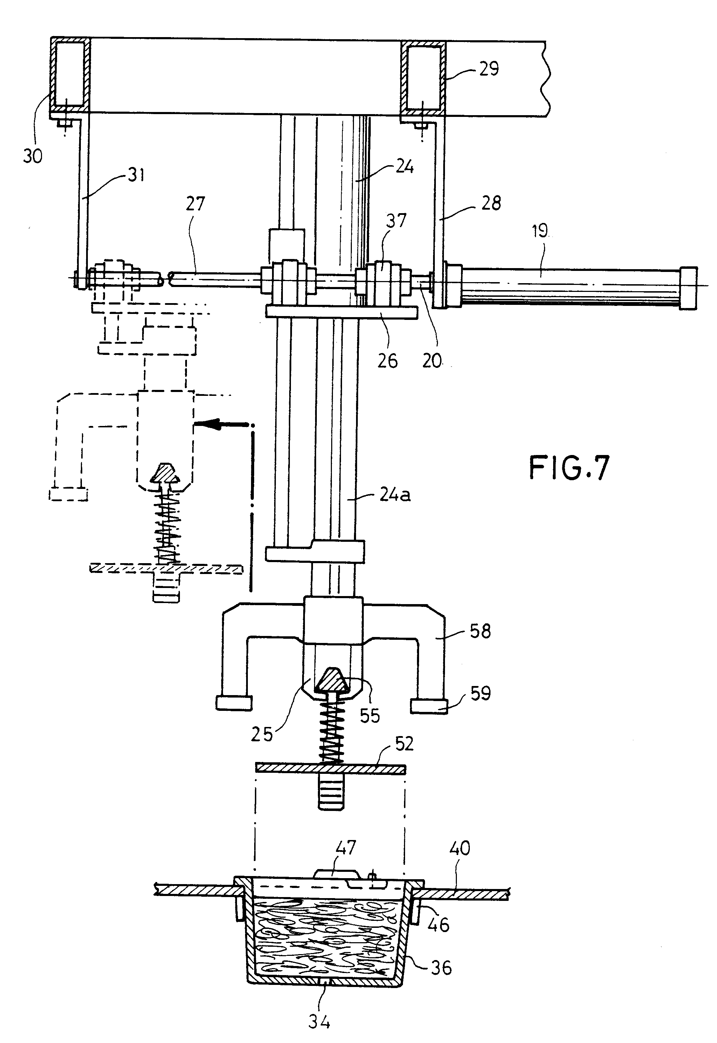

The device for removing the mould lid 52 includes (see Figs. 2 and 7) a clip 25 controlled by a drive in opening and closing for grabbing the crosspiece 55 associated to the mould lid 52 and linked to the stem 24a of an upright dynamic fluid cylinder 24 with a raising and lowering run which allows to reach in lowering any of the plates 40, 41, 42, 43 after it was displaced toward the second area 44 or free hollow of the mentioned box, the said clip having two side arms 58 associated, provided at their ends with stops 59 in resilient material, with a gap between those stops larger than the opening 45 of each plate 40, 41, 42, 43 to lodge and temporarily withhold a mould 36, the said stops 59 acting as limiting members of the vertical lowering of the said clip 25 when there is no mould, the said clip 25 remaining mounted in a horizontal moveable carriage 26 by the action of a dynamic fluid cylinder 19, between one position superposed on the area of the frame 9 and a second area above a conveyor belt 5 for evacuating the lids 52. The carriage 26 remains mounted with displacement by means of guiding rods 27 which are extending between two supports 28 and 31 linked to auxiliary beams 30 and 20 integral with a fixed structure with columns 16 which constitutes a housing of the machine. Slides 37 coaxial to the guiding rods 27 allow the displacement of the carriage 26 linked to the stem 20 of the pneumatic cylinder 19 when this later acts.

The supporting structure 17 which held the supports 1 to 4 or the frames 9 includes (see Figs. 1 and 2) an annular body rotatably and coaxially mounted on a supporting tubular core 22 ending in a floor-base 22a provided equidistant from radial arms 18 from whose ends shunt supports 1 to 4 or frame 9. The said supporting structure being driven by an intermittent rotation unit 14 and a moto-reducer 10 connected to the end of a coaxial shaft 23 with the said annular body.

The said supporting structure 17 of the supports 1 to 4 or frames 9 includes means to make the identification of the angular position of each support or frame is easier, with respect to the working station, where they are located, combined with detecting means set in the supporting fixed tubular core 22.

The machine includes, in addition, combined with the mentioned detecting means, means for automatic selection and displacement to an active position of any of the exchangeable framings 60, 61, 62, 63 supporting the exchangeable plates 40, 41, 42, 43, for lodging and temporarily withhold a mould to be used associated to each frame. Two electric cabinets contain the elements for controlling the automatism of the assembly.

The means for unloading the product mass include in addition to the sucking disks 11, driven by a dynamic fluid cylinder 38 mounted on a movable carriage -12- similar to mentioned carriage 26 and a nozzle for supplying pressurized air, mounted at the end of the stem 33 of an upright dynamic fluid cylinder 32 of raising and lowering run, which remains facing a passing hole 34 that exists at the bottom of the mould 36. The product mass is discharged on a conveyor 6.

The means for unloading the moulds comprise a similar structure of sucking discs 13 driven by a dynamic fluid cylinder 39 mounted on a horizontal movable carriage 15 in order to discharge the moulds on a conveyor 7.

The machine proposed, will include a casing of the whole machine with an access door to a first station for loading the moulds in one of the plates, whose door is provided with driving means constituted by a dynamic fluid cylinder, its closure being essential to start the operation cycle and this door and mentioned casing having available panels or grids which allows to view the interior of each stations distributed along a circumferential circuit.

The object of the invention being sufficiently described, it is pointed out that the invention includes any variation of details which should not alter the essentiality of the invention which is summarized in following claims.

## Claims

**1.-** An automatic mould unloader for meat products, such as hams and the like which after sustained baking in a mould, compressed in the said baking mould by a lid inserted in the mould and provided with, at least, a crosspiece mounted floating on two or more columns integral with the lid, with resilient means in between, and arms having a toothed profile for hooking the said lid to the mould, hinged on one end of that crosspiece, and with one of its teeth hooked under an external rim which surrounds the mouthpiece of the mould, the said unloader performing in a sequence the operations of removing the lid from the mould, unloading the product from that mould and evacuating the product and empty moulds, **characterized in that** it comprises at least, four identical supports designed to lodge and fasten the moulds, assembled in an annular supporting structure applied to the displacement of those moulds in a closed circuit, each support including a frame foreseen for mounting, at least, two exchangeable plates each of them including an opening allowing the body of a certain mould to be inserted, with an external rim thereof, which surrounds the mouthpiece, abutting on the periphery of the said opening, and said plates including means to temporarily withhold the body of the said mould to the mentioned plate and, at same time, to release the locking arms which fastens the lid to the mould. The said frames passe along their displacement in closed circuit, in sequence, at least by four stations: a first station for loading to the plates attached to the frames a mould charged with the product just backed, a second station having a lid removing and evacuating device associated, a third station including means for unloading the product from the mould and evacuating it outside, and a four station wherein the evacuation of the empty mould occurs.

**2.-** An automatic mould unloader, as claimed in claim 1, characterized in that the means to withhold the mould and to release the lid locking arms, embodied in each of exchangeable plates to lodge and to temporarily withhold a mould, that may be associated to the frame, include catches rotatably mounted in the said plate, driven by dynamic fluid cylinders, installed at the lower part of related plate, located close to the position each of the arms to lock the lid to the mould adopts, when the said mould is lodged in the plate, the pattern of the said catches being such that at one of their positions they are superposed on the rim of the said mould mouthpiece, retaining it linked to that plate, while one of its sides outwardly pushes releasing the locking arms, the height of the catch being in addition higher than the space between two teeth adjacent of the said locking arms and including a chamfered profile in its lower dihedral.

**3.-** An automatic mould unloader, as claimed in claim 1 characterized in that the openings of the plates detachably associated to the supports or framings, include close to their edges and starting from the lower part of each plate, some walls uprightly oriented to the said plate and following the outline of the opening, designed to cooperate for guiding the mould walls in order to facilitate their insertion and evacuation.

**4.-** An automatic mould unloader, as claimed in claim 1 characterized in that each frame adopts the shape of a box devoid of two opposite bases, which includes several frames foreseen for mounting in each of them an exchangeable plate designed to lodge and to temporarily withhold a mould body, making the removal of its lid, the said mould emptying and evacuating easier, each of these plates being designed for a certain type of mould and the said frames being arranged in parallelism to these bases of the frame and equidistant, crosswise the hollow of the box and with their side edges introduced within side guides facing each other, in such a way the said frames, and with them mentioned plates, are moving along these guides through pushing members , from a first area where they remain superposed , to a second area where any of the plates, which is chosen, is coincident with a free space of the hollow of the box, allowing to receive the body of a mould, inserted in the related opening.

**5.-** An automatic mould unloader as claimed in claim 4, characterized in that each of the frames for assembling the plates for lodging and temporarily withhold the moulds has available in one of its sides, close to the corners, lugs , where the ends of stems of dynamic fluid cylinders are connected, parallel to the guides for moving the said plates to the second area, to load a mould, or to come back to the first area, after ending the operative cycle.

**6.-** An automatic mould unloader, as claimed in claim 1, characterized in that the device for removing the mould lid includes a clip controlled by a drive in opening and closing for grabbing the crosspiece associated to the mould lid and linked to the stem of an upright dynamic fluid cylinder with a raising and lowering run which allows to reach in lowering any of the plates after it was displaced toward the second area or free hollow of the mentioned box, the said clip having two side arms associated, provided at their ends with stops in resilient material, with a gap between those stops larger than the opening of each plate to lodge and temporarily withhold a mould, the said stops acting as limiting members of the vertical lowering of the said clip when there is no mould, the said clip remaining mounted in a horizontal moveable carriage by the action of a dynamic fluid cylinder, between one position superposed on the area of the frame and a second area above a conveyor belt for evacuating the lids, said movable carriage remaining mounted with displacement by means of guiding rods which extends between two supports linked to auxiliary beams integral with a fixed structure with columns which constitutes a housing of the machine allowing slides coaxial to said guiding rods the horizontal displacement of said carriage linked to the stem of the a pneumatic cylinder when this later acts.

**7.-**An automatic mould unloader, as claimed in claim 1 characterized in that the means for unloading the product mass include upper sucking disks driven by a first dynamic fluid cylinder of raising and lowering run mounted on a horizontal movable carriage and a nozzle for supplying pressurized air, mounted at the end of the stem of an second upright dynamic fluid cylinder of raising and lowering run, which remains at the end of one of its strokes facing a passing hole that exists at the bottom of the mould the product mass being discharged on an adjacent conveyor.

**8.-**An automatic mould unloader, as claimed in claim 1 characterized in that the means for unloading the empty moulds comprise a similar structure of sucking discs driven by a dynamic fluid cylinder of raising and lowering run mounted on a horizontal movable carriage which discharge the moulds on a adjacent conveyor.
